# EUROPÄISCHE PATENTANMELDUNG

(11) **EP 4 741 123 A1**
(43) Veröffentlichungstag der Anmeldung: **13.05.2026**
(21) Anmeldenummer: 24212409.7
(22) Anmeldetag: 12.11.2024
(51) Int. Cl.: B26D 3/06, B26D 3/16, B31B 50/14, B31B 50/25, B23D 45/10, B26D 1/18, B26D 1/24, B26D 7/02, B26D 7/06, B26D 1/00, B26D 7/01, B65D 5/32, B65D 81/05

(54) **VERFAHREN UND VORRICHTUNG ZUR HERSTELLUNG VON MARKIERTEN KARTONLEISTEN**

(71) Anmelder: Zerhusen Kartonagen GmbH, 49401 Damme (DE)
(72) Erfinder: ZERHUSEN, Marc, 49401 Damme (DE); KROGMANN, Gerald, 49393 Lohne (DE)
(74) Vertreter: Maiwald GmbH

(57) **Zusammenfassung**

Die Erfindung betrifft ein Verfahren zur Herstellung von markierten Kartonleisten (1, 1'), umfassend die Schritte:
a) Bereitstellen von mindestens zwei im Querschnitt U-förmigen, ineinander verschachtelt angeordneten Kartonleisten (1, 1'),
b) Fixieren der Kartonleisten (1, 1'), beispielsweise durch Einklemmen oder Einspannen, und
c) Markieren der Kartonleisten (1, 1') durch Einschnitte und/oder Kerben (2), die mit Hilfe einer Schneid- oder Sägeeinrichtung (3) in vorzugsweise regelmäßigen Abständen in jeweils mindestens eine Seitenwand (4) der Kartonleisten (1, 1') eingebracht werden.

Die Erfindung betrifft ferner eine Vorrichtung (10) zur Herstellung von markierten Kartonleisten (1, 1').

## Beschreibung

Die Erfindung betrifft ein Verfahren und eine Vorrichtung zur Herstellung von markierten Kartonleisten. Die Markierung dient der Einteilung der Kartonleisten in Kartonleistenabschnitte definierter Länge, wobei die Länge an den jeweiligen Verwendungszweck anpassbar ist.

Ein Kartonleistenabschnitt definierter Länge kann insbesondere als Kantenschutz in der Bau- und/oder Möbelindustrie verwendet werden. Bevorzugte Abnehmer der nach dem vorgeschlagenen Verfahren hergestellten markierten Kartonleisten sind daher Unternehmen aus der Bau- und/oder Möbelindustrie.

### Stand der Technik

Eine Leiste, die als Kantenschutz einsetzbar ist, weist häufig einen U-förmigen Querschnitt auf, so dass sie einfach auf eine zu schützende Kante einer Platte, beispielsweise einer Tischplatte, aufgeschoben werden kann. Die Kante der Platte ist dann durch die Leiste geschützt, was insbesondere beim Transport der Platte von Vorteil ist. Am Bestimmungsort der Platte wird dann die Leiste wieder entfernt und in der Regel direkt entsorgt. Bei einer Kantenschutzleiste handelt es sich demnach um ein eher kurzlebiges Produkt.

Zur Herstellung von Kantenschutzleisten werden daher üblicherweise günstige Werkstoffe verwendet. Ferner werden solche Werkstoffe bevorzugt, die eine gewisse Nachgiebigkeit aufweisen, so dass unter Stoßbelastung eine Dämpfungswirkung erzielt wird. Häufig werden daher Kantenschutzleisten aus Kunststoff, insbesondere aus Schaumkunststoff, hergestellt. Aus ökologischen Gründen ist die Verwendung von Kantenschutzleisten aus Kunststoff jedoch abzulehnen.

Eine ökologisch vertretbare Alternative stellt die Verwendung von Leisten aus Karton dar. Denn dieser Werkstoff wird aus nachwachsenden Rohstoffen hergestellt und kann kostengünstig recycelt werden, so dass Ressourcen und Umwelt geschont werden. Bei dem erfindungsgemäßen Verfahren gelangen daher Kartonleisten zum Einsatz.

Die vorliegende Erfindung ist mit der Aufgabe befasst, Kartonleisten zu markieren, um diese in Kartonleistenabschnitte definierter Länge einzuteilen. Die Kartonleistenabschnitte sollen zudem möglichst einfach, insbesondere ohne den Einsatz eines Werkzeugs, von den Kartonleisten abzutrennen sein, um sie ihrer bestimmungsgemäßen Verwendung zuzuführen, vorzugsweise der Verwendung als Kantenschutz.

Zur Lösung der Aufgabe werden das Verfahren mit den Merkmalen des Anspruchs 1 sowie die Vorrichtung mit den Merkmalen des Anspruchs 7 vorgeschlagen. Vorteilhafte Weiterbildungen der Erfindung sind den jeweiligen Unteransprüchen zu entnehmen.

### Offenbarung der Erfindung

Das vorgeschlagene Verfahren zur Herstellung von markierten Kartonleisten umfasst die Schritte:
a) Bereitstellen von mindestens zwei im Querschnitt U-förmigen, ineinander verschachtelt angeordneten Kartonleisten,
b) Fixieren der Kartonleisten, beispielsweise durch Einklemmen oder Einspannen, und
c) Markieren der Kartonleisten durch Einschnitte und/oder Kerben, die mit Hilfe einer Schneid- oder Sägeeinrichtung in vorzugsweise regelmäßigen Abständen in jeweils mindestens eine Seitenwand der Kartonleisten eingebracht werden.

Bei dem vorgeschlagenen Verfahren werden Einschnitte und/oder Kerben als Markierung in die Kartonleisten eingebracht. Diese teilen die Kartonleisten in Kartonleistenabschnitte definierter Länge ein. Vorzugsweise wird eine Länge gewählt, die besonders geeignet für die Verwendung der Kartonleistenabschnitte als Kantenschutz ist. Vor der Verwendung als Kantenschutz müssen die einzelnen Kartonleistenabschnitte dann nur noch von den Kartonleisten abgetrennt werden. Ein Abmessen zur Einteilung der Kartonleisten in definierte Kartonleistenabschnitte ist dank der Markierung nicht mehr erforderlich.

Das Abtrennen der einzelnen Kartonleistenabschnitte von den Kartonleisten kann aufgrund der eingebrachten Einschnitte und/oder Kerben in einfacher Weise durch Abknicken, Abbrechen und/oder Abreißen bewirkt werden, da im Bereich der Einschnitte und/oder Kerben der Kartonleistenquerschnitt jeweils geschwächt ist. Der Einsatz eines Werkzeugs zum Abtrennen, insbesondere zum Zuschneiden und/oder Ablängen, der Kartonleisten ist demnach ebenfalls verzichtbar. Die Verwendung der Kartonleisten bzw. Kartonleistenabschnitte als Kantenschutz wird dadurch deutlich vereinfacht.

Da das Abtrennen der Kartonleistenabschnitte von den Kartonleisten vorteilhafterweise erst bei Verwendung erfolgt, können die nach dem vorgeschlagenen Verfahren markierten Kartonleisten als Langware hergestellt und gelagert werden. Als Langware können die markierten Kartonleisten zudem als kompaktes Leistenpaket verpackt und transportiert werden. Das heißt, dass generell das Handling der markierten Kartonleisten vereinfacht wird.

Durch die vorgeschlagene ineinander verschachtelte Anordnung der Kartonleisten können zudem mit nur einem Schnitt mehrere Kartonleisten markiert bzw. eingeschnitten werden. Dies ermöglicht eine effiziente und kostengünstige Herstellung von markierten Kartonleisten in hohen Stückzahlen. Die ineinander verschachtelte Anordnung der Kartonleisten kann auf unterschiedliche Art und Weise realisiert werden. Beispielsweise können die Kartonleisten derart ineinandergesteckt werden, dass sie ineinander liegen oder zumindest ineinander eingreifen. Ersteres setzt unterschiedlich große, insbesondere unterschiedlich breite, Kartonleisten voraus. Bevorzugt liegen die Kartonleisten in mindestens zwei unterschiedlichen Breiten vor, so dass sie zumindest paarweise ineinandergesteckt bzw. ineinander verschachtelt angeordnet werden können. Die Verwendung unterschiedlich breiter Kartonleisten besitzt den Vorteil, dass von den Kartonleisten abgetrennte Kartonleistenabschnitte als Kantenschutz für Platten mit unterschiedlich breiten Kanten eingesetzt werden können.

Gleich breite Kartonleisten können in der Weise ineinander verschachtelt angeordnet werden, dass jeweils mindestens eine Seitenwand einer Kartonleiste in eine Öffnung einer weiteren Kartonleiste eingreift. Die Kartonleisten sind in diesem Fall bevorzugt derart orientiert, dass ihre Öffnungen einander zugewandt sind. Greift eine erste Seitenwand einer ersten Kartonleiste in die Öffnung einer zweiten Kartonleiste, kann eine zweite Seitenwand der ersten Kartonleiste in die Öffnung einer dritten Kartonleiste oder in einen Zwischenraum zwischen der zweiten und der dritten Kartonleiste eingreifen. Die ineinander verschachtelte Anordnung der Kartonleisten erfordert demnach nicht, dass eine Kartonleiste vollständig in einer anderen Kartonleiste aufgenommen ist.

In Weiterbildung der Erfindung wird vorgeschlagen, dass in Schritt a) die im Querschnitt U-förmigen, ineinander verschachtelt angeordneten Kartonleisten in einer Lage übereinander-, ineinander- und/oder nebeneinanderliegend bereitgestellt werden. Auf diese Weise kann eine hohe Anzahl an Kartonleisten gleichzeitig markiert bzw. eingeschnitten werden. Eine Lage umfasst vorzugsweise zwanzig bis zweihundert Kartonleisten. Durch die vorgeschlagene ineinander verschachtelte Anordnung kann eine sehr hohe Anzahl an Kartonleisten platzsparend in einer Lage bereitgestellt werden. Dies gilt insbesondere bei Verwendung unterschiedlich breiter Kartonleisten, da diese in der Weise angeordnet werden können, dass sich die Anzahl der Leisten pro Lage vervielfacht.

Wie bereits erwähnt, werden vorzugsweise in Schritt a) die im Querschnitt U-förmigen, ineinander verschachtelt angeordneten Kartonleisten jeweils mit mindestens einer Seitenwand in eine Öffnung einer weiteren Kartonleiste eingreifend bereitgestellt. Ferner vorzugsweise sind dabei die Öffnungen der ineinander eingreifenden Kartonleisten einander zugewandt. Dadurch ist es möglich, dass jede Kartonleiste mindestens eine in eine Öffnung einer weiteren Kartonleiste eingreifende Seitenwand aufweist. Bei unterschiedlich breiten Kartonleisten kann die Kartonleiste mit der geringeren Breite zwei Seitenwände aufweisen, die in eine Öffnung einer weiteren Kartonleiste eingreifen.

Die ineinander verschachtelt angeordneten Kartonleisten können paarweise gruppiert werden, so dass jeweils eine Seitenwand einer ersten Kartonleiste in eine Öffnung der jeweils anderen Kartonleiste eingreift. Eine Vielzahl gleicher Kartonleistenpaare kann dann nebeneinander liegend in einer Lage bereitgestellt werden.

Anstelle einer paarweisen Gruppierung kann auch eine Gruppierung in untenliegende und obenliegende Kartonleisten vorgenommen werden. Die Öffnungen der untenliegenden Kartonleisten weisen dabei jeweils nach oben, so dass sie in der Lage sind, mindestens eine Seitenwand einer obenliegenden Kartonleiste aufzunehmen.

Bevorzugt weisen die Öffnungen der obenliegenden Kartonleisten jeweils nach unten, so dass auch sie in der Lage sind, mindestens eine Seitenwand einer untenliegenden Kartonleiste aufzunehmen. Die untenliegenden und/oder die obenliegenden Kartonleisten können auf diese Weise dicht an dicht gelegt werden, so dass eine besonders kompakte Anordnung der ineinander verschachtelt angeordneten Kartonleisten erzielt wird.

Des Weiteren wird vorgeschlagen, dass in Schritt c) die Einschnitte und/oder Kerben jeweils in zwei sich gegenüberliegende Seitenwände einer Kartonleiste in der Weise eingebracht werden, dass sich die Einschnitte und/oder Kerben in er Seitenansicht einander überdecken. Das Abtrennen einzelner Kartonleistenabschnitte von der Kartonleiste durch einfaches Abknicken, Abbrechen und/oder Abreißen wird dadurch weiter erleichtert. Dies gilt insbesondere dann, wenn die in die beiden Seitenwände eingebrachten Einschnitte und/oder Kerben sich jeweils von der Öffnung der im Querschnitt U-förmigen Kartonleiste in Richtung der Seitenwand erstrecken, die der Öffnung gegenüberliegt. Vorzugsweise werden dabei die beiden Seitenwände nur eingeschnitten und nicht vollständig durchtrennt. Ferner vorzugsweise werden die beiden Seitenwände jeweils von beiden Seiten eingeschnitten, aber nicht vollständig durchtrennt, so dass das Abtrennen einzelner Kartonleistenabschnitte einfach durch Abknicken, Abbrechen und/oder Abreißen in die eine Richtung oder die andere Richtung bewirkt werden kann.

Bevorzugt werden in Schritt c) die Kartonleisten jeweils allseitig markiert. Das heißt, dass die Einschnitte und/oder Kerben jeweils in alle drei Seitenwände der im Querschnitt U-förmigen Kartonleisten eingebracht werden. Das Abtrennen einzelner Kartonleistenabschnitte durch Abknicken, Abbrechen und/oder Abreißen wird dadurch weiter vereinfacht. Vorzugsweise wird dabei jeweils die der Öffnung gegenüberliegende Seitenwand vollständig durchtrennt und die jeweils hieran angrenzenden Seitenwände werden ein- oder beidseitig lediglich bereichsweise eingeschnitten.

Abhängig von der Ausrichtung der Kartonleisten in Bezug auf die Schneid- oder Sägeeinrichtung bzw. abhängig von der Schnittführung kann sich ein dreiseitiges Markieren bzw. Einschneiden zwangsläufig bereits durch die ineinander verschachtelte Anordnung der Kartonleisten ergeben, so dass das dreiseitige Markieren bzw. Einschneiden der Kartonleisten keinen Mehraufwand erfordert. Beispielsweise kann beim vollständigen Durchtrennen einer der Öffnung gegenüberliegenden Seitenwand der Schnitt so tief geführt werden, dass die hieran angrenzenden Seitenwände mit eingeschnitten werden. Greift in die Öffnung dieser Kartonleiste eine Seitenwand einer weiteren Kartonleiste ein, wird auch diese zugleich mit eingeschnitten. Auf diese Weise können mit nur einem Schnitt drei Seitenwände einer ersten Kartonleiste sowie mindestens eine weitere Seitenwand einer weiteren Kartonleiste markiert bzw. eingeschnitten werden.

Ferner bevorzugt werden in Schritt c) die Einschnitte und/oder Kerben jeweils in einem Abstand von 50 mm bis 500 mm, vorzugsweise in einem Abstand von 100 mm bis 300 mm, in die mindestens eine Seitenwand eingebracht. Der Abstand entspricht der bevorzugten Länge eines als Kantenschutz einsetzbaren Kartonleistenabschnitts. Im Fall einer anderen Verwendung der einzelnen Kartonleistenabschnitte können die Längen angepasst werden. Ferner können die Kartonleisten jeweils in unterschiedlich lange Kartonleistenabschnitte eingeteilt werden.

Darüber hinaus wird eine Vorrichtung zur Herstellung von markierten Kartonleisten vorgeschlagen. Die Vorrichtung umfasst:
- eine Einrichtung zum Bereitstellen von mindestens zwei im Querschnitt U-förmigen, ineinander verschachtelt angeordneten Kartonleisten,
- Fixiermittel zum Fixieren der Kartonleisten sowie
- eine Schneid- oder Sägeeinrichtung zum Einbringen von Einschnitten und/oder Kerben in jeweils mindestens eine Seitenwand der Kartonleisten.

Die Vorrichtung ist insbesondere zur Durchführung des zuvor beschriebenen erfindungsgemäßen Verfahrens geeignet, so dass mit der Vorrichtung die gleichen Vorteile erzielbar sind. Insbesondere kann eine Vielzahl an Kartonleisten durch Einbringen von Einschnitten und/oder Kerben in der Weise markiert werden, dass die Kartonleisten jeweils in Kartonleistenabschnitte definierter Länge eingeteilt werden, die einfach durch Abknicken, Abrechen und/oder Abreißen von den markierten Kartonleisten abgetrennt werden können. Die abgetrennten Kartonleistenabschnitte können dann als Kantenschutz eingesetzt werden.

Bevorzugt umfasst die Einrichtung zum Bereitstellen der Kartonleisten einen Hebetisch und/oder einen Pneumatikzylinder. Mit Hilfe des Hebetisches können die Kartonleisten als Leistenpaket bereitgestellt werden, das eine Vielzahl an Kartonleisten umfasst. Diese sind vorzugsweise in dem Leistenpaket in mehreren Lagen angeordnet, wobei jede Lage ineinander verschachtelt angeordnete Kartonleisten aufweist. Durch die ineinander verschachtelte Anordnung kann jede Lage zwanzig bis zweihundert Kartonleisten umfassen. Über den Hebetisch kann das Leistenpaket auf eine vorgegebene Entnahmehöhe angehoben werden, so dass die Kartonleisten Lage für Lage vom Leistenpaket abgeschoben werden können. Das Abschieben der Kartonleisten vom Leistenpaket kann mittels des Pneumatikzylinders bewirkt werden. Nach dem Abschieben einer Lage wird dann das Leistenpaket über den Hebetisch wieder auf die vorgegebene Entnahmehöhe angehoben.

Ferner bevorzugt umfasst die Einrichtung zum Bereitstellen der Kartonleisten mehrere Transportwalzen, vorzugsweise mehrere Transportwalzenpaare. Mittels der Transportwalzen bzw. Transportwalzenpaare können die Kartonleisten Lage für Lage der Schneid- oder Sägeeinrichtung zugeführt werden. Gemäß einer bevorzugten Ausführungsform umfasst die Vorrichtung insgesamt vier Transportwalzenpaare.

Bevorzugt ist jeweils eine Transportwalze eines Transportwalzenpaars unterhalb und eine oberhalb der zu transportierenden Kartonleisten angeordnet. Die jeweils oberhalb angeordnete Transportwalze kann dann als Andrückwalze eingesetzt werden. Die Anpresskraft der Andrückwalzen kann über Luftdruck erzeugt und eingestellt werden.

Die Walzen eines Transportwalzenpaares werden vorzugsweise über einen gemeinsamen drehzahlgesteuerten Motor angetrieben. Weiterhin vorzugsweise wird jedes Transportwalzenpaar über einen eigenen Motor angetrieben, wobei die Motoren bevorzugt synchron betrieben werden.

Damit die ineinander verschachtelt angeordneten Kartonleisten während des gesamten Verfahrens ihre Lage zueinander nicht verändern, werden sie mit Fixiermitteln fixiert. Bevorzugt umfassen die Fixiermittel mehrere Exzenterklemmen. Zwischen diesen können die Kartonleisten eingeklemmt bzw. eingespannt werden.

Des Weiteren wird vorgeschlagen, dass die zum Markieren der Kartonleisten eingesetzte Schneid- oder Sägeeinrichtung eine obere und eine untere Schneid- oder Sägeeinheit aufweist. Die Markierungen in Form von Einschnitten und/oder Kerben können auf diese Weise zeitgleich von zwei Seiten in die Kartonleisten eingebracht werden, was das Markieren der Kartonleisten beschleunigt.

Gemäß einer bevorzugten Ausführungsform der Erfindung weist jede Schneid- oder Sägeeinheit eine elektrisch oder pneumatisch angetriebene Linearführung mit einem Motor auf, der über einen Keilriemen eine Welle antreibt, auf der mindestens ein Kreissägeblatt montiert ist. Mit Hilfe der Linearführung kann ein Schnitt quer zu den Kartonleisten ausgeführt werden, so dass mit nur einem Schnitt eine Vielzahl an Kartonleisten markiert bzw. eingeschnitten werden können. Bevorzugt sind auf der Welle mindestens zwei Kreissägeblätter in einem Abstand zueinander angeordnet, so dass die Anzahl der zeitgleich ausgeführten Schnitte vervielfacht werden kann. Über den Abstand der Kreissägeblätter zueinander kann dann der Abstand zwischen den als Markierung dienenden Einschnitten und/oder Kerben eingestellt werden.

Die vorgeschlagene Vorrichtung zur Herstellung markierter Kartonleisten ermöglicht eine weitgehend automatisierte Herstellung und damit hohe Stückzahlen bei zugleich geringen Kosten.

Weitere Vorteile der Erfindung werden nachfolgend anhand der beigefügten Zeichnungen näher beschrieben. Diese zeigen:
- Fig. 1: eine Draufsicht auf eine bevorzugte Ausführungsform einer erfindungsgemäßen Vorrichtung,
- Fig. 2: eine Längsseitenansicht der Vorrichtung der Figur 1,
- Fig. 3: eine Kurzseitenansicht der Vorrichtung der Figur 1,
- Fig. 4: eine perspektivische Darstellung der Vorrichtung der Figur 1 und
- Fig. 5: eine perspektivische Darstellung einer nach einem erfindungsgemäßen Verfahren hergestellten markierten Kartonleiste,
- Fig. 6: a) eine erste Seitenansicht, b) eine zweite Seitenansicht, c) eine dritte Seitenansicht einer nach einem erfindungsgemäßen Verfahren hergestellten markierten Kartonleiste sowie d) einen Querschnitt und e) einen Längsschnitt durch die Kartonleiste,
- Fig. 7: a) und b) jeweils einen Querschnitt durch mehrere ineinander verschachtelt angeordnete Kartonleisten gleicher Breite, wobei die Kartonleisten in a) paarweise und in b) fortlaufend ineinander verschachtelt angeordnet sind,
- Fig. 8: a) und b) jeweils einen Querschnitt durch mehrere ineinander verschachtelt angeordnete Kartonleisten unterschiedlicher Breite, wobei die Kartonleisten in a) paarweise und in b) fortlaufend ineinander verschachtelt angeordnet sind.

### Ausführliche Beschreibung der Zeichnungen

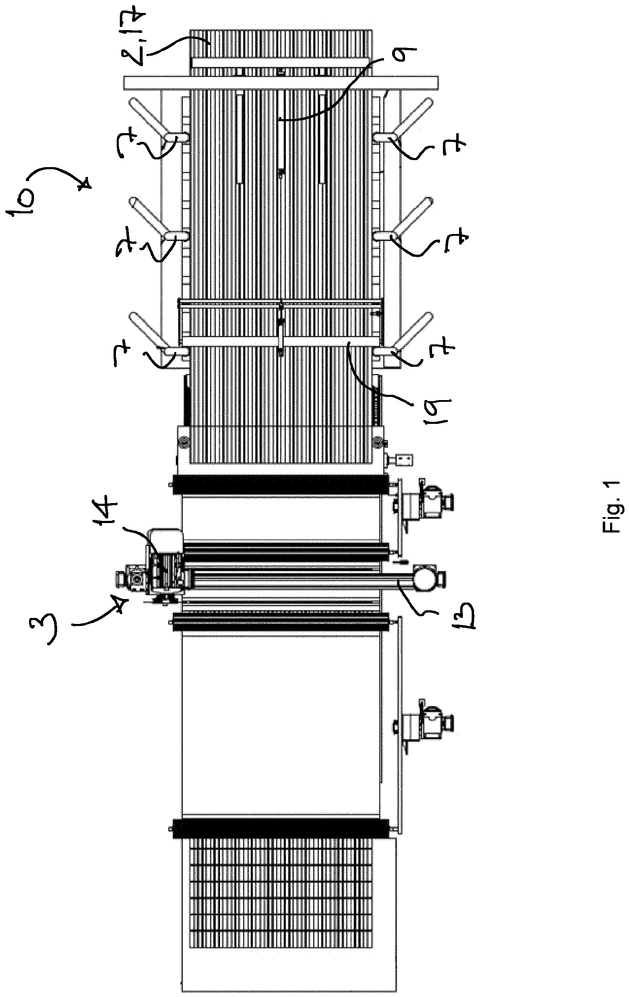

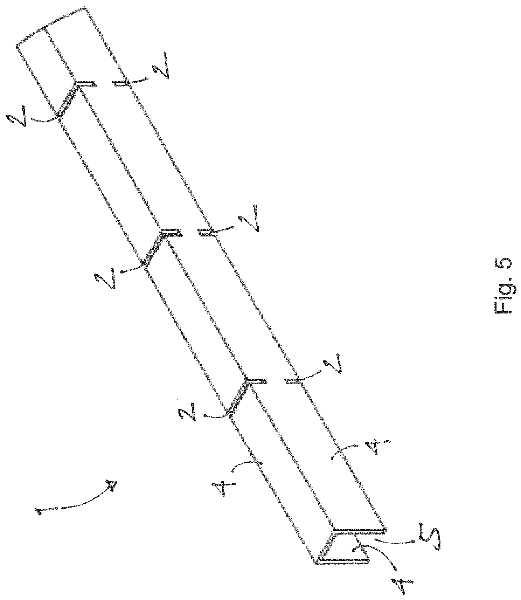

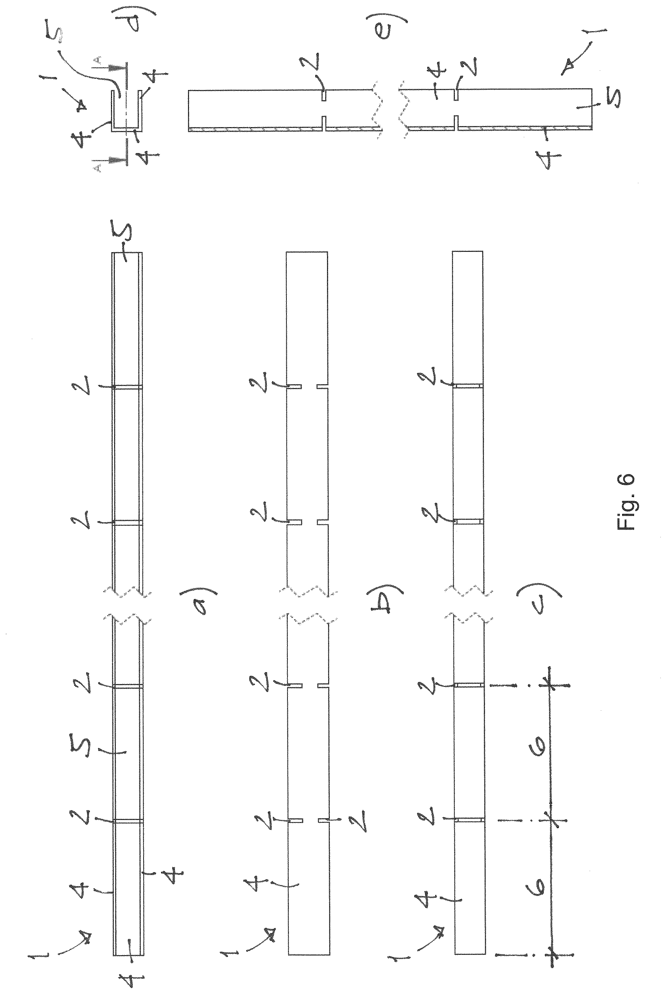

Die in den Figuren 1 bis 4 dargestellte Vorrichtung 10 dient der Herstellung markierter Kartonleisten 1, 1'. Eine mit Hilfe der Vorrichtung 10 herstellbare markierte Kartonleiste 1 ist beispielhaft in der Figur 5 dargestellt. Die Kartonleisten 1,1' sollen durch die Markierung in Kartonleistenabschnitte 6 definierter Länge unterteilt werden (siehe beispielhaft Figur 6c)), so dass die Kartonleistenabschnitte 6 nach dem Abtrennen von den Kartonleisten 1, 1' als Kantenschutz einsetzbar sind. Das Abtrennen soll dabei einfach durch Abknicken, Abbrechen und/oder Abreißen bewirkt werden können.

Die Kartonleisten 1, 1' weisen jeweils einen U-förmigen Querschnitt auf, der aus drei winklig, insbesondere rechtwinklig zueinander angeordneten Seitenwänden 4 gebildet wird (siehe Figur 5), wobei zwei sich gegenüberliegende Seitenwände 4 eine Öffnung 5 begrenzen. Als Markierung werden Einschnitte und/oder Kerben 2 in alle drei Seitenwände 4 eingebracht. Die der Öffnung 5 gegenüberliegende Seitenwand 4 wird dabei vollständig durchtrennt und die sich gegenüberliegenden Seitenwände 4 werden jeweils beidseitig bereichsweise eingeschnitten, so dass über die beiden sich gegenüberliegenden Seitenwände 4 die einzelnen Kartonleistenabschnitte 6 verbunden bleiben.

In den Figuren 6a) bis 6c) ist jeweils eine Seitenansicht der markierten Kartonleiste 1 der Figur 5 dargestellt. Die Figur 6a) zeigt eine Seitenansicht mit Blick auf die Öffnung 5, die Figur 6b) zeigt eine Seitenansicht auf eine beidseits bereichsweise eingeschnittene Seitenwand 4 und Figur 6c) zeigt eine Seitenansicht mit Blick auf die der Öffnung 5 gegenüberliegende Seitenwand 4, die durch einen Einschnitt 2 vollständig durchtrennt ist.

Den Schnittdarstellungen der Figuren 6d) und 6e) ist insbesondere der U-förmige Querschnitt der Kartonleiste 1 der Figur 5 zu entnehmen sowie die Anordnung der Einschnitte 2 zur Unterteilung der Kartonleiste 1 in einzelne Kartonleistenabschnitte 6.

Anhand der in den Figuren 1 bis 4 dargestellten Vorrichtung 10 wird nachfolgend ein bevorzugtes Verfahren zur Herstellung markierter Kartonleisten 1,1' beschrieben.

Bei dem Verfahren werden vorzugsweise die im Querschnitt U-förmigen, ineinander verschachtelt angeordneten Kartonleisten 1, 1' als Leistenpaket 17 bereitgestellt. Das Leistenpaket 17 ist weiterhin vorzugsweise auf einer Palette 18 angeordnet und verpackt. Die Anordnung auf einer Palette 18 ermöglicht den Transport des Leistenpakets 17 mit Hilfe eines Gabelstaplers oder einer "Ameise" zur Vorrichtung 10. Die Verpackung stellt sicher, dass das Packmuster, das heißt die ineinander verschachtelte Anordnung der Kartonleisten 1, 1' während des Transports erhalten bleibt.

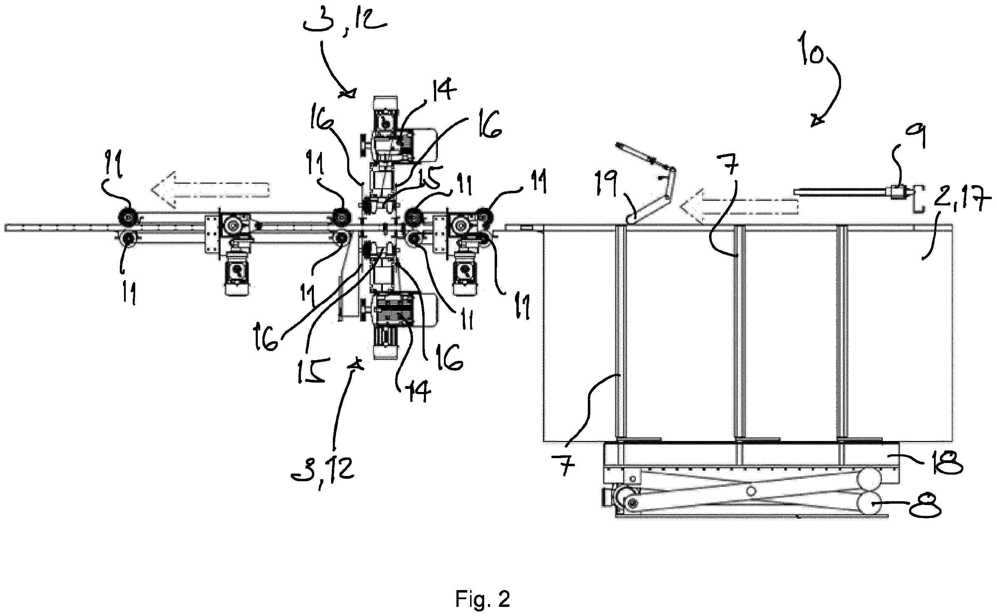

Das vorzugsweise auf einer Palette 18 angeordnete, verpackte Leistenpaket 17 kann - beispielsweise mit Hilfe eines Gabelstaplers oder einer "Ameise" - zunächst auf einen Einlaufförderer (nicht dargestellt), beispielsweise in Form einer Kettenbahn, gesetzt werden. Von dort kann es dann auf einen Hebetisch 8 gefahren werden (siehe Figur 2). Alternativ kann das Leistenpaket 17 auch direkt auf dem Hebetisch 8 abgesetzt werden. Über den Hebetisch 8 kann dann das Leistenpaket 17 schrittweise angehoben werden, um die Kartonleisten 1, 1' Lage für Lage vom Leistenpaket 17 abzuschieben.

Zuvor werden jedoch die Kartonleisten 1, 1' mit Hilfe von Fixiermitteln 7 fixiert. Als Fixiermittel 7 weist die dargestellte Vorrichtung 10 beidseits des Leistenpakets 17 angeordnete Exzenter auf (siehe Figur 1). Nach dem Fixieren kann das Leistenpaket 17 entpackt werden.

Das entpackte Leistenpaket 17 kann anschließend mit Hilfe des Hebetischs 8 auf eine vorgegebene Entnahmehöhe angehoben werden. Über eine oberhalb des Leistenpakets 17 angeordnete, auslenkbare Walze 19 kann das Erreichen der Entnahmehöhe erkannt werden (siehe Figur 1).

Mit Erreichen der vorgegebenen Entnahmehöhe wird vorliegend mit Hilfe eines Pneumatikzylinders 9 die zuoberst liegende erste Lage der ineinander verschachtelt angeordneten Kartonleisten 1, 1' abgeschoben und an eine Transporteinrichtung übergeben (siehe Figur 1). Die Transporteinrichtung umfasst vorliegend mehrere Transportwalzen 11 bzw. Transportwalzenpaare. Die dargestellte Vorrichtung 10 weist insgesamt vier Transportwalzenpaare auf. Jeweils eine Transportwalze 11 eines Transportwalzenpaars ist unterhalb und eine oberhalb der Kartonleisten 1,1' angeordnet. Die oberhalb angeordnete Transportwalze 11 dient als Andrückwalze (siehe Figur 2). Die Transportwalzen 11 eines Transportwalzenpaares der dargestellten Vorrichtung 10 werden über einen gemeinsamen drehzahlgesteuerten Motor angetrieben, wobei jedes Transportwalzenpaar über einen eigenen Motor verfügt. Die Motoren aller Transportwalzenpaare werden synchron betrieben.

Mit Hilfe der ersten beiden Transportwalzenpaare werden die Kartonleisten 1, 1' Lage für Lage einer Schneid- oder Sägeeinrichtung 3 zugeführt. Innerhalb einer Lage sind die Kartonleisten 1,1' derart ineinander verschachtelt angeordnet, dass ihre Öffnungen jeweils zu einer Seite zeigen. Mit Hilfe der Schneid- oder Sägeeinrichtung 3, die vorliegend eine obere und einer untere Schneid- oder Sägeeinheit 12 aufweist, werden die Kartonleisten 1,1' dann durch Einbringen der Einschnitte und/oder Kerben 2 markiert.

Mit Hilfe der oberen und der unteren Schneid- oder Sägeeinheit 12 können alle drei Seitenwände 4 der Kartonleisten 1, 1' in nur einem Arbeitsschritt markiert bzw. eingeschnitten werden. Durch die ineinander verschachtelte Anordnung der Kartonleisten 1, 1' kann zudem in nur einem Arbeitsschritt eine sehr hohe Anzahl von Kartonleisten 1, 1' gleichzeitig markiert bzw. eingeschnitten werden.

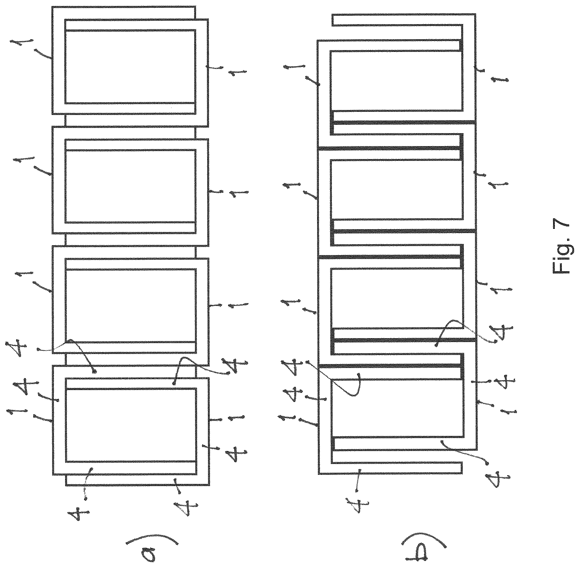

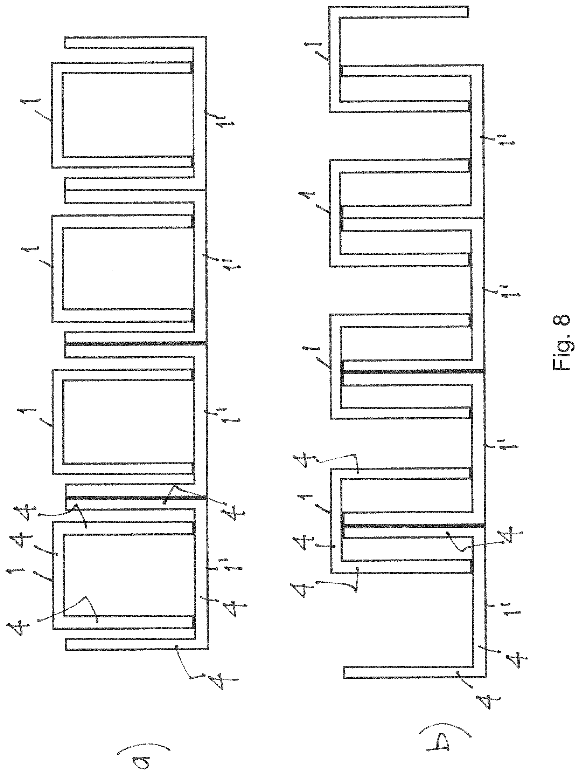

Die ineinander verschachtelte Anordnung der Kartonleisten 1, 1' kann auf unterschiedliche Art realisiert werden. Beispiele sind den Figuren 7a) und 7b) sowie den Figuren 8a) und 8b) zu entnehmen. In den Figuren 7a) und 7b) sind die Kartonleisten 1 alle gleich breit. In den Figuren 8a) und 8b) sind die Kartonleisten 1 schmaler als die Kartonleisten 1'. In den Figuren 7a) und 8a) sind die Kartonleisten 1 bzw. 1, 1' jeweils paarweise ineinander verschachtelt angeordnet, so dass eine Lage aus einer Vielzahl solcher nebeneinander liegender Kartonleistenpaare besteht. In den Figuren 7b) und 8b) sind die Kartonleisten 1 bzw. 1, 1' jeweils fortlaufend ineinander verschachtelt angeordnet. Die jeweils untenliegenden Kartonleisten 1, 1' werden hierzu nebeneinandergelegt, so dass ihre Öffnung 5 nach oben zeigt. Die obenliegenden Kartonleisten 1 werden seitlich versetzt hierzu jeweils mit der Öffnung 5 nach unter zeigend auf die untenliegenden Kartonleisten 1, 1 ' gelegt, so dass jeweils eine Seitenwand 4 einer Kartonleiste 1, 1' in eine Öffnung 5 einer anderen Kartonleiste 1, 1' eingreift.

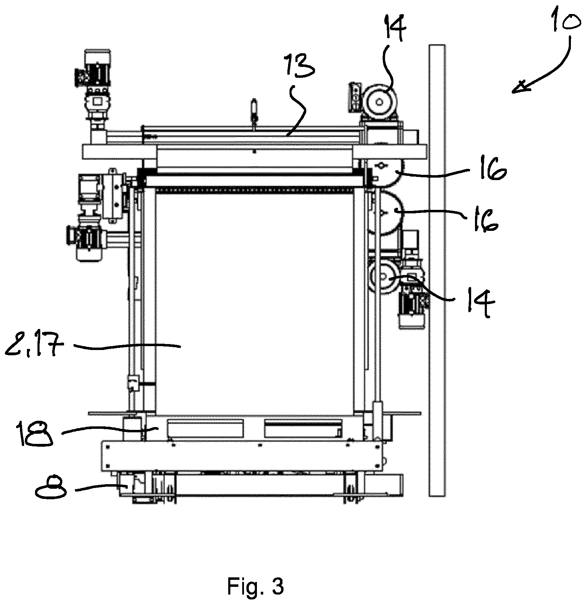

Bei der in den Figuren 1 bis 4 dargestellten Vorrichtung 10 sind die obere und die untere Schneid- oder Sägeeinheit 12 gleich aufgebaut. Jede Schneid- oder Sägeeinheit 12 umfasst vorliegend eine elektrisch angetriebene Linearführung 13, auf der ein Motor 14 montiert ist (siehe Figuren 1 und 3), der über einen Keilriemen eine Welle 15 antreibt, auf der in einem Abstand zueinander zwei Kreissägeblätter 16 montiert sind (siehe Figur 2). Die beiden Schneid- oder Sägeeinheiten 12 fahren gleichzeitig durch die Kartonleisten 1, 1'. Zum Transport der Kartonleisten 1, 1' durch die Schneid- oder Sägeeinrichtung 3 sind immer mindestens zwei Transportwalzenpaare im Einsatz.

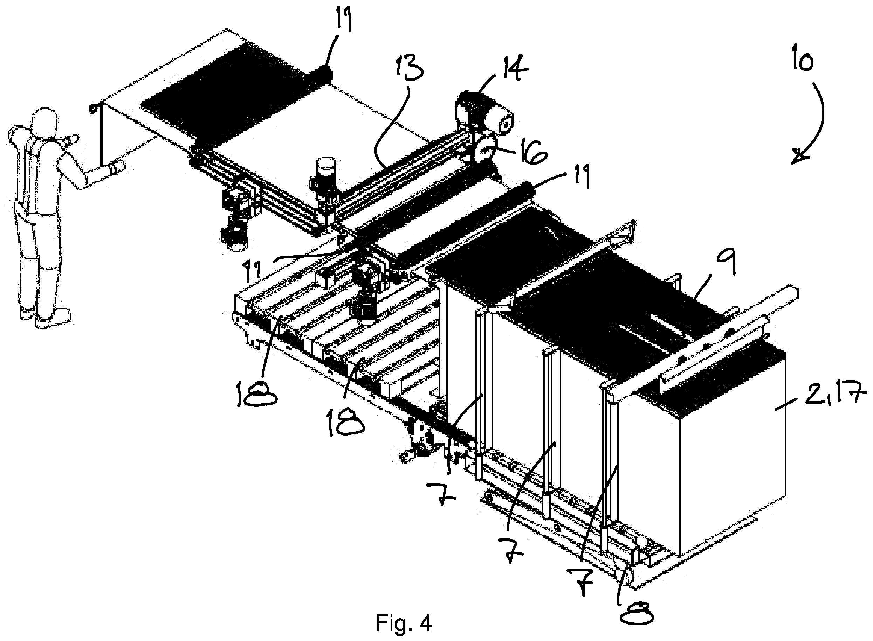

Nach dem Markieren können die Kartonleisten 1, 1' an eine Verpackungsstation übergeben werden. Ist die letzte Lage von der Palette 18 abgeschoben, fährt der Hebetisch 8 automatisch wieder runter, so dass die nunmehr leere Palette 18 abtransportiert werden kann. Die leeren Paletten 18 können für die Verpackung der markierten Kartonleisten 1, 1' genutzt werden (siehe Figur 4).

### Bezugszeichenliste

- 1: Kartonleiste
- 2: Einschnitte und/oder Kerben
- 3: Schneid- oder Sägeeinrichtung
- 4: Seitenwand
- 5: Öffnung
- 6: Kartonleistenabschnitt
- 7: Fixiermittel
- 8: Hebetisch
- 9: Pneumatikzylinder
- 10: Vorrichtung
- 11: Transportwalze
- 12: Schneid- oder Sägeeinheit
- 13: Linearführung
- 14: Motor
- 15: Welle
- 16: Kreissägeblatt
- 17: Leistenpaket
- 18: Palette
- 19: Walze

## Patentansprüche

1. Verfahren zur Herstellung von markierten Kartonleisten (1, 1'), umfassend die Schritte:
a) Bereitstellen von mindestens zwei im Querschnitt U-förmigen, ineinander verschachtelt angeordneten Kartonleisten (1, 1'),
b) Fixieren der Kartonleisten (1, 1'), beispielsweise durch Einklemmen oder Einspannen, und
c) Markieren der Kartonleisten (1, 1') durch Einschnitte und/oder Kerben (2), die mit Hilfe einer Schneid- oder Sägeeinrichtung (3) in vorzugsweise regelmäßigen Abständen in jeweils mindestens eine Seitenwand (4) der Kartonleisten (1, 1') eingebracht werden.

2. Verfahren nach Anspruch 1,
**dadurch gekennzeichnet, dass** in Schritt a) die im Querschnitt U-förmigen, ineinander verschachtelt angeordneten Kartonleisten (1, 1') in einer Lage übereinander-, ineinander- und/oder nebeneinanderliegend bereitgestellt werden, wobei vorzugsweise eine Lage zwanzig bis zweihundert Kartonleisten umfasst.

3. Verfahren nach Anspruch 1 oder 2,
**dadurch gekennzeichnet, dass** in Schritt a) die im Querschnitt U-förmigen, ineinander verschachtelt angeordneten Kartonleisten (1, 1') jeweils mit mindestens einer Seitenwand (4) in eine Öffnung (5) einer weiteren Kartonleiste (1,1') eingreifend bereitgestellt werden, wobei vorzugsweise die Öffnungen (5) der ineinander eingreifenden Kartonleisten (1, 1') einander zugewandt sind.

4. Verfahren nach einem der vorhergehenden Ansprüche,
**dadurch gekennzeichnet, dass** in Schritt c) die Einschnitte und/oder Kerben (2) jeweils in zwei sich gegenüberliegende Seitenwände (4) einer Kartonleiste (1, 1') in der Weise eingebracht werden, dass sich die Einschnitte und/oder Kerben (2) in der Seitenansicht einander überdecken.

5. Verfahren nach einem der vorhergehenden Ansprüche,
**dadurch gekennzeichnet, dass** in Schritt c) die Kartonleisten (1, 1') jeweils allseitig markiert werden, wobei vorzugsweise die jeweils der Öffnung (5) gegenüberliegende Seitenwand (4) vollständig durchtrennt wird und die jeweils hieran angrenzenden Seitenwände (4) ein- oder beidseitig lediglich bereichsweise eingeschnitten werden.

6. Verfahren nach einem der vorhergehenden Ansprüche,
**dadurch gekennzeichnet, dass** in Schritt c) die Einschnitte und/oder Kerben (2) jeweils in einem Abstand von 50 mm bis 500 mm, vorzugsweise in einem Abstand von 100 mm bis 300 mm, in die mindestens eine Seitenwand (4) eingebracht werden.

7. Vorrichtung (10) zur Herstellung markierter Kartonleisten (1, 1'), umfassend
- eine Einrichtung zum Bereitstellen von mindestens zwei im Querschnitt U-förmigen, ineinander verschachtelt angeordneten Kartonleisten (1, 1'),
- Fixiermittel (7) zum Fixieren der Kartonleisten (1, 1') sowie
- eine Schneid- oder Sägeeinrichtung (3) zum Einbringen von Einschnitten und/oder Kerben (2) in jeweils mindestens eine Seitenwand (4) der Kartonleisten (1, 1').

8. Vorrichtung (10) nach Anspruch 7,
**dadurch gekennzeichnet, dass** die Einrichtung zum Bereitstellen der Kartonleisten (1, 1') einen Hebetisch (8) und/oder einen Pneumatikzylinder (9) umfasst.

9. Vorrichtung (10) nach Anspruch 7 oder 8,
**dadurch gekennzeichnet, dass** die Einrichtung zum Bereitstellen der Kartonleisten (1, 1') mehrere Transportwalzen (11), vorzugsweise mehrere Transportwalzenpaare, umfasst.

10. Vorrichtung (10) nach einem der Ansprüche 7 bis 9,
**dadurch gekennzeichnet, dass** die Fixiermittel (7) Exzenterklemmen umfassen.

11. Vorrichtung (10) nach einem der Ansprüche 7 bis 10,
**dadurch gekennzeichnet, dass** die Schneid- oder Sägeeinrichtung (3) eine obere und eine untere Schneid- oder Sägeeinheit (12, 13) aufweist.

12. Vorrichtung (10) nach einem der Ansprüche 7 bis 11,
**dadurch gekennzeichnet, dass** die Schneid- oder Sägeeinrichtung (3) eine elektrisch oder pneumatisch angetriebene Linearführung (14) mit einem Motor (15) aufweist, der über einen Keilriemen eine Welle (16) antreibt, auf der mindestens ein Kreissägeblatt (17) montiert ist.
